# EUROPÄISCHE PATENTSCHRIFT

(11) **EP 4 056 889 B1**
(45) Veröffentlichungstag und Bekanntmachung des Hinweises auf die Patenterteilung: **28.01.2026**
(21) Anmeldenummer: 22159084.7
(22) Anmeldetag: 28.02.2022
(51) Int. Cl.: F21V 8/00, G09F 13/04, G09F 13/18

(54) **SICHERHEITSZEICHENLEUCHTE MIT LICHTLEITER**
SAFETY SIGN LIGHT WITH LIGHT GUIDE
LUMINAIRE DE SIGNALISATION DE SÉCURITÉ À FIBRE OPTIQUE

(30) Priorität: 09.03.2021 DE 102021105588
(43) Veröffentlichungstag der Anmeldung: 14.09.2022
(73) Patentinhaber: Zumtobel Lighting GmbH, 6850 Dornbirn (AT)
(72) Erfinder: Schwaighofer, Andreas, 6850 Dornbirn (AT)
(74) Vertreter: Thun, Clemens

(56) Entgegenhaltungen:
- WO-A1-2023/274799
- DE-U1- 202012 101 316
- DE-U1- 202012 101 318
- DE-U1- 202016 107 502
- FR-A1- 3 077 915

## Beschreibung

Die Erfindung betrifft eine Sicherheitszeichenleuchte, insbesondere eine Rettungszeichenleuchte, mit einem plattenförmigen Lichtleiter zur Lichtabgabe.

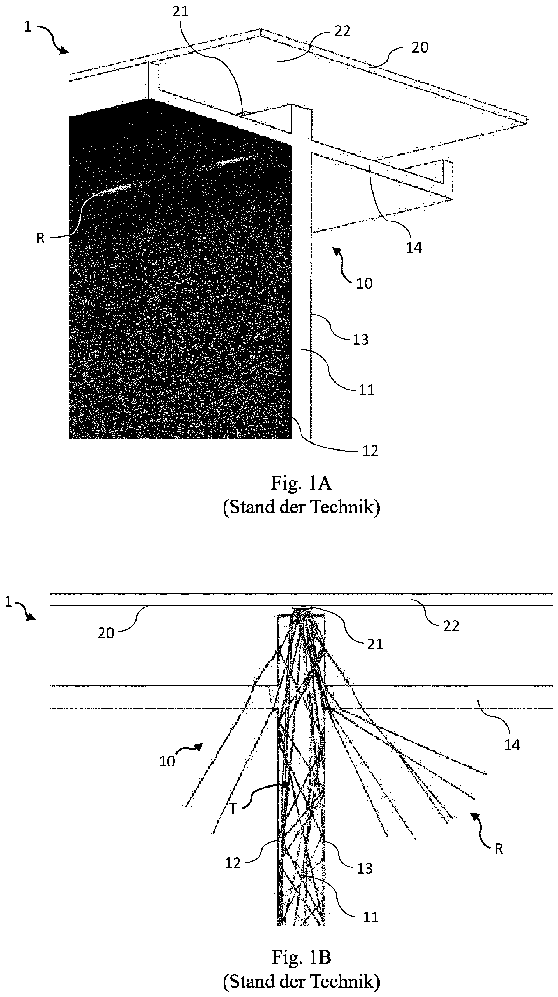

Es gibt verschiedene Arten von Rettungszeichenleuchten, wobei moderne und ästhetisch ansprechende Rettungszeichenleuchten meist einen außenliegenden Lichtleiter aufweisen, wobei an Flachseiten des Lichtleiters üblicherweise zumindest ein Rettungszeichen bzw. Sicherheitszeichen mit einem darauf angezeigten Piktogramm, beispielsweise einer Fluchtwegrichtung, angebracht ist. In der Figur 1A und Figur 1B ist eine Ausführung eines aus dem Stand der Technik bekannten Lichtleiters 11 einer Rettungszeichenleuchte 1 dargestellt. Bei solchen Rettungszeichenleuchten 1 bzw. Sicherheitszeichenleuchten 1 ist üblicherweise ein längliches Leuchtmittel 20, bestehend aus einer Platine 22 und darauf angeordneten LEDs 21, im Inneren eines Gehäuses (nicht in den Figuren 1A und 1B dargestellt) aufgenommen, wobei das Gehäuse üblicherweise in Lichtaustrittsrichtung der LEDs 21 durch ein Abdeckelement 10 geschlossen ist. Dieses Abdeckelement 10, besteht hierbei aus dem Lichtleiter 11 und einer Abdeckung 14, wobei die Abdeckung 14 den Lichtleiter 11 seitlich umgibt und in einem oberen Bereich des Lichtleiters 11 mit diesem gekoppelt ist.

Das von den LEDs 21 abgegebene Licht wird hierbei über eine Schmalseite des Lichtleiters 11 eingekoppelt, wobei dieses Licht dann hauptsächlich über Flachseiten 12, 13 des Lichtleiters 11 abgegeben werden soll, sodass das Sicherheitszeichen bzw. das Rettungszeichen mitsamt dem dargestellten Piktogramm, bzw. der dargestellten Fluchtwegrichtung erkennbar ist. Hierbei entstehen allerdings im Kopplungsbereich des Lichtleiters 11 mit der Abdeckung 14 im Betrieb der Rettungszeichenleuchte 1 Helligkeitsspots, welche im Bereich um die LEDs 21 auftreten. Diese Helligkeitsspots werden auch als Lichtreflex, bzw. LED-Reflex, bezeichnet und sind in der Figur 1A mit dem Bezugszeichen *R* versehen. In der Figur 1B ist die Anordnung aus der Figur 1A in einem Querschnitt senkrecht zur Längsachse des Leuchtmittels 20 und des Abdeckelements 10 gezeigt, wobei hierbei mittels Raytracing der Strahlengang des von den LEDs 21 abgegebenen Lichts dargestellt ist, wobei der Lichtreflex R, also die in der Umgebung das Kopplungsbereichs der Abdeckung 14 mit dem Lichtleiter 11 austretenden Lichtstrahlen, deutlich erkennbar ist.

Durch diesen Lichtreflex *R* verringert sich das durch Totalreflexion *T* im Inneren des Lichtleiters 11 geführte Licht, sodass die Lichtausbeute der Rettungszeichenleuchte 1 bzw. Sicherheitszeichenleuchte 1 zur Beleuchtung verringert ist. Das durch den Lichtreflex *R* abgegebene Licht ist darüber hinaus nicht ästhetisch und mindert somit die Ästhetik und die augenscheinliche Wertigkeit der gesamten Leuchte 1.

Weitere Rettungszeichenleuchten sind beispielsweise aus der DE 20 2012 101316 U1, DE 20 2012 101318 U1 oder DE 20 2016 107502 U1 bekannt. Die Lichtleiter weisen hierbei im oberen Endbereich eine T-förmige Profilierung auf, welche eine einfache Befestigung am Leuchtengehäuse bzw. einem Lichtquellenträger ermöglicht. Bei der DE 20 2016 107502 U1 erweitert sich der Lichtleiter am der Lichtquelle zugewandten Ende flanschartig.

Der Erfindung liegt die Aufgabe zugrunde, eine Rettungszeichenleuchte mit einem Abdeckelement mit einer effizienteren und ästhetischeren Lichtabgabe anzugeben.

Diese Aufgabe wird durch eine Rettungszeichenleuchte gemäß dem unabhängigen Anspruch 1 gelöst. Besondere Ausführungsarten der Erfindung sind in den abhängigen Ansprüchen angegeben.

Die so geschaffene Rettungszeichenleuchte bzw. Sicherheitszeichenleuchte ermöglicht eine optimierte Lichtabgabe der Rettungszeichenleuchte, wobei mittels der Ausgestaltung des Lichtleiters insbesondere im Bereich um den Verbindungsabschnitt und dem Lichteinfangabschnitt eine ungewollte Lichtauskopplung im Verbindungsabschnitt von Abdeckung und Lichtleiter vermieden wird. Durch die unterschiedlichen Dicken werden die eigentlich im Bereich des Verbindungsabschnitts wegdriftenden Lichtstrahlen durch den dem Verbindungsabschnitt nachfolgenden dickeren Bereich, also dem Lichteinfangabschnitt, sozusagen aufgefangen, sodass die Lichtstrahlen weiterhin im Lichtleiter gehalten werden können. Insbesondere wird durch die unterschiedlichen Dicken auch im Bereich unmittelbar um den Verbindungsbereich weiterhin eine Totalreflexion der Lichtstrahlen bewerkstelligt. Somit wird mit der derart gestalteten Rettungszeichenleuchte der vormals angesprochene Lichtreflex vermieden, sodass die Rettungszeichenleuchte besonders ästhetisch aussieht und weiterhin besonders effizient hinsichtlich der Lichtausbeute ist.

Gemäß einer weiteren Ausführung der Rettungszeichenleuchte ist vorgesehen, dass der Lichteinkoppelabschnitt Seitenflächen zur Totalreflexion des einkoppelten Lichts aufweist. Durch derart gestaltete Seitenflächen bzw. Totalreflexionsflächen des Lichteinkoppelabschnitts, wird das in den Lichtleiter eingekoppelte Licht besonders effizient und verlustfrei entlang des Lichtleiters weitergegeben. Hierbei unterstützen diese Totalreflexionsflächen die Lichteinkopplung und Lichtmischung des vom Leuchtelement abgegebenen Lichts. Insbesondere wird somit verhindert, dass Licht in diesem oberen Abschnitt des Lichtleiters austritt, was einer Beleuchtung des Inneren des Gehäuses der Rettungszeichenleuchte entspricht. Folglich wird das gesamte über die Lichteinkoppelfläche des Lichteinkoppelabschnitts des Lichtleiters eingekoppelte Licht verlustfrei in den nächsten Abschnitt, also den Verbindungsabschnitt des Lichtleiters übertragen.

Weiterhin ist vorzugsweise vorgesehen, dass der Lichtleiter einen Lichtauskoppelabschnitt aufweist, wobei der Lichtleiter dazu ausgebildet ist, das von dem Leuchtmittel abgegebene und über den Lichteinkoppelabschnitt eingestrahlte Licht über zumindest eine Flachseite abzustrahlen, wobei bevorzugt auf der zumindest einen Flachseite ein Sicherheitszeichen wie beispielsweise ein Rettungswegsymbol angebracht ist. Somit wird das im Lichteinkoppelabschnitt des Lichtleiters eingekoppelte Licht, durch die weiteren Abschnitte - Verbindungsabschnitt und Lichteinfangabschnitt - optimal weitergeleitet, sodass es dann im Lichtauskoppelabschnitt für eine Person sichtbar abgegeben wird, und somit das auf der Sicherheitszeichenleuchte bzw. Rettungszeichenleuchte angebrachte Sicherheitszeichen möglichst effizient beleuchtet, wobei dieses Sicherheitszeichen daher besonders gut und einfach lesbar ist. Folglich wird durch die Verhinderung des Lichtreflexes auch die Lesbarkeit des auf der Rettungszeichenleuchte angebrachten Sicherheitszeichen erhöht.

In einer besonders bevorzugten Ausführungsform weist der Lichteinfangabschnitt Seitenflächen zur Totalreflexion des im Inneren des Lichtleiters geführten Lichts auf. Hierdurch wird eine möglichst verlustfreie Lichtweiterleitung im Lichtleiter zusätzlich begünstigt, sodass die Lichtabgabe bzw. die Lichtausbeute der Rettungszeichenleuchte besonders effizient ist. Hierdurch wird die Totalreflexion und somit eine effiziente Lichtleitung im Lichteinfangabschnitt weiter gefördert.

Gemäß einer weiteren Ausführungsform ist vorgesehen, dass die Dicke des Lichteinfangabschnitts mit zunehmender Entfernung zum Lichteinkoppelabschnitt abnimmt. Mit einem so gestalteten Lichtleiter einer Rettungszeichenleuchte, kann der plattenförmige Lichtleiter besonders ästhetisch und flach ausgebildet werden. Durch die zunehmende Verringerung der Dicke des Lichtleiters im Reflexionsbereich wird insbesondere möglichst optimal auf einen nachfolgenden Lichtauskoppelabschnitt übergeleitet, welcher dann entsprechend dünn ausgestaltet sein kann, sodass die Rettungszeichenleuchte insgesamt besonders hochwertig und ästhetisch wertvoll gestaltet ist.

In einer bevorzugten Ausgestaltung weisen der Verbindungsabschnitt und der Lichteinfangabschnitt an ihren Seitenflächen eine stetige Krümmung auf. Bevorzugt ist diese Krümmung insbesondere am Übergang vom Verbindungsabschnitt zum Lichteinfangabschnitt stetig. Durch eine derartige Ausgestaltung des Lichtleiters erscheint die Oberfläche des Lichtleiters besonders gleichmäßig und nahtlos. Weiterhin werden durch diese Ausführung Oberflächengestaltungen wie Knicke, Stufen o.Ä. vermieden, welche tendenziell eine im Inneren des Lichtleiters gewünschte Totalreflexion hemmen und behindern. Somit wird mit dieser Ausführungsform eine möglichst effiziente Lichtabgabe, sowie ein besonders ästhetisches Erscheinungsbild der Rettungszeichenleuchte bzw. Sicherheitszeichenleuchte gefördert.

Weiterhin vorteilhaft ist das Leuchtmittel im Inneren der Rettungszeichenleuchte und insbesondere auf dem Abdeckelement aufliegend angeordnet. Somit bedarf es keiner speziellen Halterungselemente des Leuchtmittels, wobei weiterhin durch die Integrierte Halterung des Leuchtmittels auf dem Abdeckelement durch Auflage eine möglichst flache und kompakte Bauweise der Rettungszeichenleuchte ermöglicht ist. Somit kann das Gehäuse der Rettungszeichenleuchte ebenfalls besonders flach gestaltet sein, sodass der Lichtleiter der Rettungszeichenleuchte besonders markant erscheint, was die Lesbarkeit eines auf dem Lichtleiter angebrachten Symbols bzw. Sicherheitszeichens verbessert. Weiterhin können hierdurch Material und somit auch Produktionskosten eingespart werden, wobei die Rettungszeichenleuchte zudem ein geringeres Gewicht aufweist, und daher besonders einfach montierbar ist.

Gemäß einer weiteren Ausführung ist der Lichtleiter im Lichteinfangabschnitt in einem Querschnitt senkrecht zur Längsachse im Wesentlichen trapezförmig ausgebildet. Insbesondere kann bevorzugt vorgesehen sein, dass der Lichtleiter und dessen Abschnitte in einem Querschnitt zur Längsachse symmetrisch sind. Somit lässt sich in besonders einfacher Art und Weise eine möglichst effiziente und verlustfreie Lichtweiterleitung im Inneren des Lichtleiters bewerkstelligen.

Gemäß einer besonderen Ausführungsform ist vorgesehen, dass auf einer der Platine des Leuchtmittels zugewandten Oberfläche der Abdeckung eine Reflexionsfolie angeordnet ist. Durch eine derartige Ausgestaltung wird die Bildung eines Lichtreflexes zusätzlich gestört, sodass weiterhin die Lichtausbeute gesteigert ist. Die Reflexionsfolie verhindert hierbei, dass Lichtstrahlen durch die Abdeckung nach außen abgestrahlt werden. Weiterhin kann vorgesehen sein, dass das Leuchtmittel auf der Reflexionsfolie aufliegt, sodass eine möglichst geringe Bauhöhe des Gehäuses realisierbar ist.

Vorzugsweise ist die Abdeckung im Bereich der Verbindung zum Verbindungsabschnitt des Lichtleiters im Wesentlichen trichterförmig ausgebildet. Durch eine derartige nach unten, also in Richtung des Lichteinfangabschnitts, gerichtete Trichterform der Abdeckung, wird eine ungewollte Lichteinkopplung in die Abdeckung vermieden, sodass eine möglichst effiziente Lichtabgabe der Rettungszeichenleuchte begünstigt ist.

Erfindungsgemäß weist die Abdeckung zumindest eine Abdeckfläche und zumindest einen Verbindungssteg auf, wobei die zumindest eine Abdeckfläche sich in einem Querschnitt senkrecht zur Längsrichtung des Abdeckelements im Wesentlichen senkrecht zur Erstreckungsrichtung des Lichtleiters erstreckt, und wobei der Verbindungssteg mit dem Verbindungsabschnitt des Lichtleiters verbunden ist.

Weiterhin vorteilhaft ist das Leuchtmittel - oder die LEDs - in einer Ausnehmung des Abdeckelements angeordnet, wobei die Ausnehmung insbesondere durch den zumindest einen Verbindungssteg der Abdeckung gebildet ist. Hierdurch kann die Rettungszeichenleuchte weiterhin besonders kompakt und flach gebaut sein.

In einer weiteren Ausführungsform ist vorgesehen, dass die Abdeckung Kopplungselemente zur Kopplung des Abdeckelements mit dem Gehäuse aufweist. Hierdurch lässt sich die Montage der Rettungszeichenleuchte besonders einfach und schnell gestalten, wobei weiterhin bevorzugt das Abdeckelement werkzeuglos mit dem Gehäuse gekoppelt werden kann.

Weiterhin kann vorgesehen sein, dass das Abdeckelement das Gehäuse gemäß einer IP-Schutzart, bevorzugt IP54 oder höher, abdichtet. Durch die Erfüllung der Erfordernisse einer solchen IP-Schutzart lässt sich die Rettungszeichenleuchte besonders flexibel an unterschiedlichen Orten mit unterschiedlichen Rahmenbedingungen verwenden, wobei die im Inneren des Gehäuses der Rettungszeichenleuchte liegenden Komponenten insbesondere gegen Feuchtigkeit oder Staub geschützt sind.

Gemäß einer weiteren Ausführung ist das Abdeckelement ein Gussteil, welches insbesondere in einem Spritzgussverfahren hergestellt wurde, wobei besonders bevorzugt das Abdeckelement aus einem Kunststoff, insbesondere aus Polymethylmethacrylat gebildet ist. Ein derartig gebildetes Abdeckelement ist besonders einfach, kostengünstig und stabil herstellbar, wobei das Abdeckelement weiterhin besonders gute Lichtleiteigenschaften aufweist.

Die Erfindung wird im Folgenden anhand von Ausführungsbeispielen und mit Bezug auf die Zeichnung näher erläutert. Es zeigen:
- Figur 1A: Seitliche Darstellung einer beispielhaften Ausführung einer Rettungszeichenleuchte gemäß dem Stand der Technik, mit Visualisierung von Lichtreflexen;
- Figur 1B: Darstellung eines Querschnitts einer beispielhaften Ausführung einer Rettungszeichenleuchte gemäß dem Stand der Technik, mit Visualisierung des Strahlengangs des von den LEDs abgegebenen Lichts;
- Figur 2: Seitendarstellung einer beispielhaften Ausführung einer erfindungsgemäßen Rettungszeichenleuchte mit einem Gehäuse und einem mit dem Gehäuse verbundenen Abdeckelement;
- Figur 3: Ansicht einer beispielhaften Ausführung einer Rettungszeichenleuchte in einem Querschnitt senkrecht zur Längsachse der Rettungszeichenleuchte;
- Figur 4: Ansicht einer weiteren beispielhaften Ausführung einer Rettungszeichenleuchte in einem Querschnitt senkrecht zur Längsachse der Rettungszeichenleuchte;
- Figur 5: Ansicht einer zusätzlichen beispielhaften Ausführung einer Rettungszeichenleuchte in einem Querschnitt senkrecht zur Längsachse der Rettungszeichenleuchte;
- Figur 6A: Darstellung zur Visualisierung des Strahlengangs eines von den LEDs abgegebenen Lichts der aus der Figur 3 bekannten Ausführungsform der Rettungszeichenleuchte;
- Figur 6B: Darstellung zur Visualisierung des Strahlengangs eines von den LEDs abgegebenen Lichts der aus der Figur 4 bekannten Ausführungsform der Rettungszeichenleuchte;

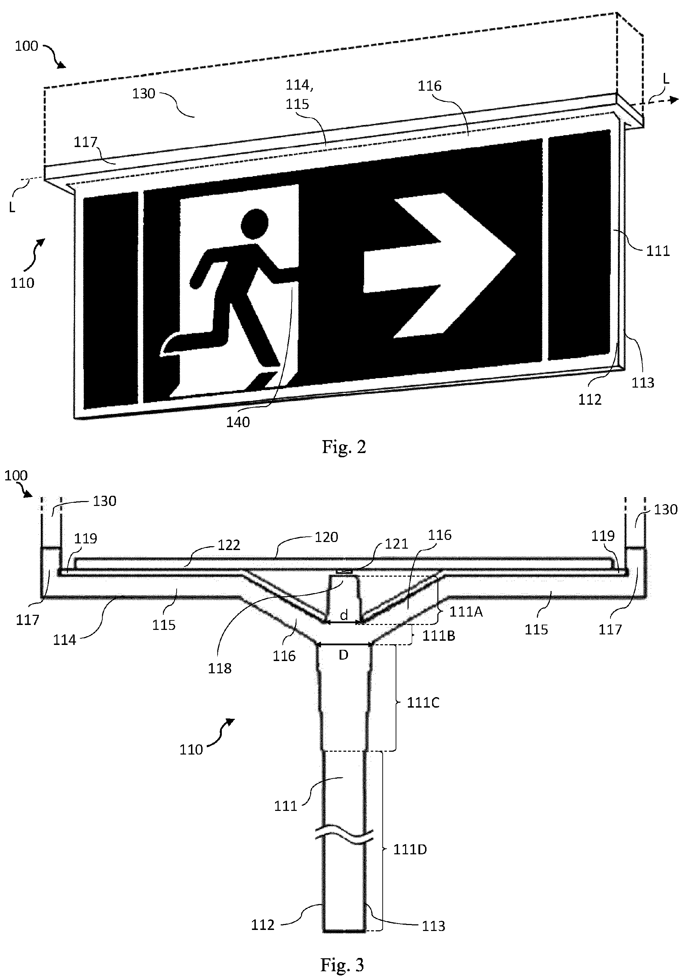

Die Figur 2 und 3 zeigen verschiedene Ansichten einer beispielhaften Ausführung einer erfindungsgemäßen Rettungszeichenleuchte 100. Die Figur 2 zeigt hierbei insbesondere eine Seitendarstellung dieser beispielhaften Ausführung einer erfindungsgemäßen Rettungszeichenleuchte 100 mit einem Gehäuse 130 und einem mit dem Gehäuse 130 verbundenen Abdeckelement 110. Die Rettungszeichenleuchte 100, bzw. Sicherheitszeichenleuchte 100, erstreckt sich hierbei entlang einer Längsachse *L*, wobei das Gehäuse 130 zur Unterseite hin durch das Abdeckelement 110 abgedeckt ist.

Im Inneren des Gehäuses 130 sind hierbei ebenso längliche Leuchtmittel 120 angeordnet wobei diese Leuchtmittel 120 zumindest eine LED 121 und eine Platine 122 aufweisen. Insbesondere kann hierbei vorgesehen sein, dass die Leuchtmittel 120 auf dem Abdeckelement 110 aufliegend gehalten sind. Das von der LED, bzw. den LEDs 121 abgegebene Licht wird hierbei über eine Lichteinkoppelfläche 118 in den Lichtleiter 111 eingekoppelt. Dieser Lichteinkoppelbereich mit der Lichteinkoppelfläche 118 befindet sich hierbei im Inneren der Rettungszeichenleuchte 100, wie der Figur 3 entnommen werden kann.

Der plattenförmige Lichtleiter 111 ist ebenso wie die Abdeckung 114 integraler Bestandteil des Abdeckelements 110. Die Abdeckung 114 weist hierbei eine näherungsweise plane Abdeckfläche 115 und einen Verbindungssteg 116 auf, wobei der Verbindungssteg 116 die Oberflächen der Abdeckfläche 115 und des Lichtleiters 111 - bevorzugt stetig - miteinander verbindet. Zumindest eine der Abdeckflächen 115 erstreckt sich hierbei in einem Querschnitt senkrecht zur Längsrichtung *L* des Abdeckelements 110 im Wesentlichen senkrecht zur Erstreckungsrichtung des Lichtleiters 111.

Der Lichtleiter 111 ist hierbei dazu ausgebildet, das von dem Leuchtmittel 120 abgegebene und über die Lichteinkoppelfläche 118 eingestrahlte Licht über zumindest eine Flachseite 112, 113 abzustrahlen, wobei bevorzugt auf der zumindest einen Flachseite 112, 113 ein Sicherheitszeichen 140 wie beispielsweise ein Rettungswegsymbol 140 angebracht ist. Der Bereich der Flachseiten 112, 113 mit dem Sicherheitszeichen 140 bildet hierbei einen für die Lichtabgabe vorgesehenen Bereich, da hierbei eine Lichtabgabe nach außen zur Illumination des Sicherheitszeichens 140 gewünscht ist.

Durch die Ausgestaltung des Abdeckelements 110, insbesondere mit dem Verbindungssteg 116 und der Abdeckfläche 115, sowie dem Lichtleiter 111 wird eine unerwünschte Lichtabgabe sowohl über die Abdeckung 114 als auch in der Nähe des Verbindungsbereichs von Abdeckung 114 und Lichtleiter 111 vermieden, sodass Lichtreflexe R verhindert sind.

Das Abdeckelement 110 kann hierbei ein Gussteil, welches insbesondere in einem Spritzgussverfahren hergestellt wurde, sein. Besonders bevorzugt ist das Abdeckelement 110 aus einem Kunststoff, insbesondere aus Polymethylmethacrylat (PMMA) gebildet, wobei ein derartig gebildetes Abdeckelement 110 besonders einfach, kostengünstig und stabil herstellbar ist, und wobei das Abdeckelement 110 weiterhin besonders vorteilhafte Lichtleiteigenschaften aufweist.

In der Figur 3 ist eine Querschnittsdarstellung einer beispielhaften Ausführung einer Rettungszeichenleuchte 100 gezeigt. In diesem Querschnitt senkrecht zur Längsachse *L* ist das Abdeckelement 110 im Wesentlichen T-förmig, wobei der längliche plattenförmige Lichtleiter 111 eine Symmetrieachse des Abdeckelements 110 bildet. In der in Figur 3 dargestellten Ausführung ist lediglich das Leuchtmittel 120 sowie das Abdeckelement 110 der Rettungszeichenleuchte 100, bzw. Sicherheitszeichenleuchte 100, gezeigt.

Die in der Figur 3 dargestellten Ausführungsform der Sicherheitszeichenleuchte 100 weist ein längliches Leuchtmittel 120 auf, wobei die Platine 122 des Leuchtmittels 120 flächig ausgeführt ist, und insbesondere auch über der Abdeckfläche 115 ausgebildet ist. Diese plattenförmige und flächige Ausgestaltung der Platine 122 begünstigt eine möglichst große passive Wärmeabführung über die gesamte Fläche der Platine 122. Weiterhin umfasst die Abdeckung 114 in der gezeigten Ausführung eine Reflexionsfolie 119, welche auf einer der Platine 122 des Leuchtmittels 120 zugewandten Oberfläche der Abdeckung 114 angeordnet ist, sodass die Platine 122 auf der Reflexionsfolie 119 aufliegt, und dadurch positioniert gehalten wird. Die zumindest eine LED 121 des Leuchtmittels 120 ist mittig auf der Platine 122 angeordnet, wobei die bevorzugten mehreren LEDs 121 hierbei in einem definierten geringen Abstand zu einem oberen ersten Abschnitt des Lichtleiters 111 angeordnet sind, sodass die Lichteinkopplung des von den LEDs 121 abgegebenen Lichts möglichst effizient ist. Insbesondere kann vorgesehen sein, dass der Abstand zwischen LEDs 121 und Lichtleiter 111 durch die auf der Reflexionsfolie 119 oder auf der Abdeckung 114 aufliegenden Platine 122 fixiert definiert ist. Weiterhin kann auch vorgesehen sein, dass die Platine 122 direkt mit dem Gehäuse 130 gekoppelt ist und der Abstand zwischen Lichtleiter 111 und LED 121 durch diese Kopplung am Gehäuse eingerichtet ist. Durch den Abstand zwischen LED 121 und Lichtleiter 111 wird zudem vermieden, dass Erschütterungen des Lichtleiters 111, beispielsweise bei der Montage oder beim Transport der Sicherheitszeichenleuchte 100, direkt auf die LEDs 121 übertragen werden, sodass die LEDs 121 im Inneren der Leuchte 100 durch das Abdeckelement 110 geschützt werden. Mittels der Reflexionsfolie 119 wird weiterhin verhindert, dass Lichtstrahlen durch die Abdeckung 114 nach außen abgestrahlt werden, sodass Lichtreflexe R vermieden werden. Die Reflexionsfolie 119 erfüllt auch eine weitere - insbesondere ästhetische - Funktion, wobei die Reflexionsfolie 119 die Sicht auf die im Inneren der Leuchte 100 befindlichen elektronischen Komponenten, wie die LEDs 121 und die Platine 122, verhindert, sodass eine die Rettungszeichenleuchte 100 betrachtende Person lediglich die ästhetisch ansprechende Reflexionsfolie 119 sieht. Selbstverständlich ist die in der Figur 3 gezeigte Ausführung der Sicherheitszeichenleuchte 100 auch ohne die Reflexionsfolie 119 denkbar, wobei hierbei das Leuchtmittel 120 auf der Abdeckung 114 angeordnet sein kann oder auch mit dem Gehäuse 130 gekoppelt sein kann, um den gewünschten Abstand zwischen LED 121 und Lichteinkoppelfläche 118 des Lichtleiters 111 zu erhalten.

Die Abdeckung 114 und der Lichtleiter 111 bilden hierbei integrale Bestandteile des Abdeckelements 110. Die Abdeckung 114 umfasst in der gezeigten Ausführung neben der Abdeckfläche 115 und dem Verbindungssteg 116 auch Halteelemente 117, welche seitlich angeordnet sind und dazu ausgebildet sind, die Abdeckung 114, und somit das Abdeckelement 110, mit dem Gehäuse 130 zu koppeln. Diese Halteelemente 117 können insbesondere zur werkzeuglosen Montage am Gehäuse 130 gestaltet sein, beispielsweise als Rastelement für eine rastende Verbindung. Mittels dieser Halteelemente 117 zur bevorzugt werkzeuglosen Montage lässt sich die Rettungszeichenleuchte 100 besonders einfach und sicher montieren. Insbesondere kann vorgesehen sein, dass die Montage zwar werkzeuglos erfolgen kann, die Demontage allerdings lediglich mit Werkzeugen funktioniert, sodass im Betrieb die im Inneren der Rettungszeichenleuchte 100 liegenden Komponenten geschützt sind, wobei insbesondere auch ein Eingreifen in die Leuchte 100 und somit eine Gefährdung eines Benutzers verhindert ist. Weiterhin sind Ausführungsformen des Abdeckelements 110 denkbar, in welchen die Kopplung bzw. Halterung zum Gehäuse 130 die Erfordernisse einer IP-Schutzart erfüllt, wobei hierbei das Abdeckelement 110 das Gehäuse 130 gemäß dieser IP-Schutzart, bevorzugt gemäß IP54 oder höher, abdichtet, sodass die Verwendung und Positionierung der Sicherheitszeichenleuchte 100 besonders flexibel ist, und die Leuchte 100 auch in staubigen und/oder feuchten Umgebungen verwendet werden kann.

Der Lichtleiter 111 ist in verschiedene Abschnitte einteilbar, wobei er in der in Figur 3 gezeigten Ausführung einen dem Leuchtmittel 120 zugewandten Lichteinkoppelabschnitt 111A, der zur Lichteinkopplung und Lichtmischung des vom Leuchtmittel 120 abgegebenen Lichts mittels Totalreflexionsflächen ausgebildet ist, und einen Verbindungsabschnitt 111B, welcher dem Lichteinkoppelabschnitt 111A nachfolgend angeordnet ist, und an welchem die Abdeckung 114, mit dem Lichtleiter 111 verbunden ist aufweist. Der Verbindungsabschnitt 111B bildet somit den Bereich des Lichtleiters 111, der in den Verbindungssteg 116 übergeht.

Weiterhin weist der Lichtleiter 111 in der gezeigten Ausführungsform einen Lichteinfangabschnitt 111C, welcher dem Verbindungsabschnitt 111B nachfolgend angeordnet ist, sowie einen Lichtauskoppelabschnitt 111D auf. Im Lichteinfangabschnitt 111C, der in der Ausführung der Figur 3 in einem Querschnitt senkrecht zur Längsachse *L* der Leuchte 100 trapezförmig ausgebildet ist, werden die Lichtstrahlen, welche durch die Anbindung der Abdeckung 114 im Verbindungsabschnitt 111B nicht mehr totalreflektiert werden, sozusagen aufgefangen, sodass diese Lichtstrahlen nicht als Lichtreflex *R* aus dem Lichtleiter austreten, sondern mittels einer Totalreflexion *T* an den Seitenflächen des Lichteinfangabschnitts 111C im Inneren des Lichtleiters 111 gehalten werden. Wesentlich ist hierbei, dass in einem Querschnitt senkrecht zur Längsachse *L* des Lichtleiters 111 die Dicke D des Lichteinfangabschnitts 111C am Übergang zum Verbindungsabschnitt 111B größer ist als die Dicke *d* des Lichteinkoppelabschnitts 111A am Übergang zum Verbindungsabschnitt 111B. Hierdurch wird bewerkstelligt, dass die im Verbindungsabschnitt 111B nach außen abdriftenden Lichtstrahlen im Lichteinfangabschnitt 111C wieder auf eine Seitenfläche, welche insbesondere zur Totalreflexion ausgebildet ist, treffen, sodass Lichtreflexe *R* unterdrückt werden und im Wesentlichen das gesamte über die Lichteinkoppelfläche 118 - welche eine Oberfläche des Lichteinkoppelabschnitts 111A ist - in den Lichtleiter 111 eingekoppelte Licht über den Lichteinfangabschnitt 111C in den Lichtauskoppelabschnitt 111D geleitet wird. Somit ist der Lichtleiter 111 in der gezeigten Ausführung dazu ausgebildet, das von dem Leuchtmittel 120 abgegebene und über den Lichteinkoppelabschnitt 111A eingestrahlte Licht im Lichtauskoppelabschnitt 111D über zumindest eine Flachseite 112, 113 abzustrahlen. Bevorzugt ist auf der zumindest einen Flachseite 112, 113 ein Sicherheitszeichen 140 wie beispielsweise ein Rettungswegsymbol 140 angebracht. Somit ist die Lichtausbeute der Rettungszeichenleuchte 100 optimiert, sodass insbesondere das Sicherheitszeichen 140 besonders gut beleuchtet ist, wobei hierdurch die Lesbarkeit und die Ästhetik der Leuchte 100 verbessert ist.

In der gezeigten Ausführungsform weist der Lichteinfangabschnitt 111C Seitenflächen zur Totalreflexion des im Inneren des Lichtleiters 111 geführten Lichts auf, sodass das Einfangen der Lichtstrahlen besonders effizient erfolgt. Im Lichteinfangabschnitt 111C wird das im Inneren des Lichtleiters 111 vorhandene Licht weiterhin homogenisiert und mittels Totalreflexion *T* in Richtung des Lichtauskoppelabschnitts 111D geleitet. Weiterhin ist der Lichteinfangabschnitt 111C derart gestaltet, dass die Dicke *D* des Lichteinfangabschnitts 111C mit zunehmender Entfernung zum Lichteinkoppelabschnitt 111A abnimmt, sodass insbesondere eine stetige Verringerung der Lichtleiterdicke im Lichteinfangabschnitt 111C vorliegt. Hierdurch ist der Lichtleiter 111 besonders ästhetisch gestaltet, wobei der Lichtauskoppelabschnitt 111D weiterhin eine möglichst geringe Dicke aufweisen kann, sodass die Rettungszeichenleuchte 100 insgesamt kompakt, schmal und modern erscheint.

Insbesondere kann vorgesehen sein, dass der Lichtauskoppelabschnitt 111D lediglich eine Dicke in der Größenordnung von vier Millimetern aufweist.

Der Lichtauskoppelabschnitt 111D ist hierbei dazu ausgebildet, das vom Lichteinfangabschnitt 111C weitergeleitete Licht über die gesamte Länge des Lichtauskoppelabschnitts 111D homogen auszukoppeln, sodass eine gleichmäßige Beleuchtung der Flachseiten 112, 113 und somit eine gleichmäßige Beleuchtung des auf der zumindest einen Flachseite 112, 113 angebrachte Sicherheitszeichen 140 erzielt wird. Hierbei kann insbesondere vorgesehen sein, dass der Lichtauskoppelabschnitt 111D optische Strukturen zur Lichtauskopplung aufweist.

Der Verbindungssteg 116 ist in der gezeigten Ausführung trichterförmig gestaltet, wobei diese Gestaltung die Anbringung einer Reflexionsfolie 119 vereinfacht. Durch diese nach unten, also in Richtung des Lichteinfangabschnitts 111C, gerichtete Trichterform des Verbindungsstegs 116, wird eine ungewollte Lichteinkopplung vom Lichteinkoppelabschnitt 111A und vom Verbindungsabschnitt 111B in die Abdeckung 114 vermieden, sodass eine möglichst effiziente Lichtabgabe über den Lichtauskoppelabschnitt 111D der Rettungszeichenleuchte 100 erzielt wird. Durch die gezeigte trichterförmige Ausgestaltung lässt sich zudem eine möglichst geringe Bauhöhe der Sicherheitszeichenleuchte 100 realisieren. Weiterhin sind auch andere Formen des Verbindungsstegs 116 denkbar, wobei hierbei wesentlich ist, dass der Verbindungssteg 116 in Richtung Lichteinfangbereich 111C weisend geformt ist, sodass eine Lichteinkopplung in die Abdeckung 114 am Übergang von Lichteinkoppelabschnitt 111A zu Verbindungsabschnitt 111B verhindert ist und Lichtreflexe R unterdrückt werden. Hierbei kann bevorzugt vorgesehen sein, dass die LEDs 121 in einer Ausnehmung des Abdeckelements 110 angeordnet sind, wobei die Ausnehmung insbesondere durch den zumindest einen Verbindungssteg 116 der Abdeckung 114 gebildet ist. Eine derartige Gestaltung ist besonders platzsparend und begünstigt eine möglichst geringe Bauhöhe der Rettungszeichenleuchte 100.

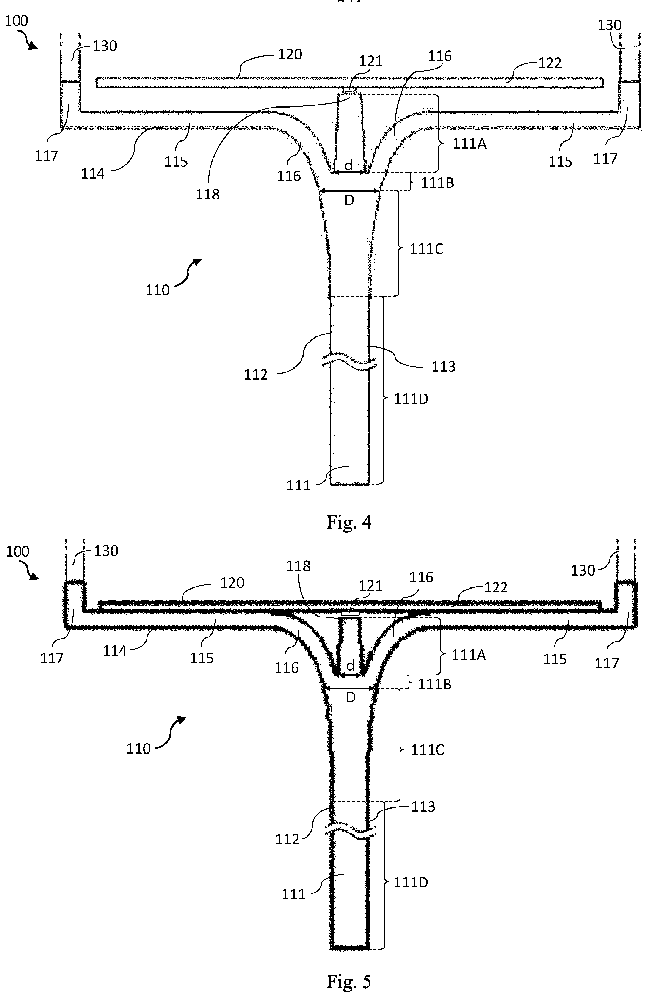

Die Figur 4 zeigt einen Querschnitt einer weiteren beispielhaften Ausführung einer Sicherheitszeichenleuchte 100. Der grundsätzliche Aufbau entspricht der in der Figur 3 gezeigten und im obigen beschrieben Ausführungsform, sodass im Folgenden lediglich Unterschiede genauer beschrieben werden. In dieser Ausführungsform ist der Verbindungssteg 116 nunmehr geschwungen und bogenförmig, sodass sich die Abdeckung 114 stetig dem Lichtleiter 111 annähert. Somit weist der Verbindungsabschnitt 111B und der Lichteinfangabschnitt 111C insbesondere an ihren Seitenflächen eine stetige Krümmung auf, sodass das Abdeckelement 110 besonders homogen und ästhetisch anspruchsvoll gestaltet ist.

Bevorzugt ist diese Krümmung auch am Übergang vom Verbindungsabschnitt 111B zum Lichteinfangabschnitt 111C stetig.

Das wesentliche Merkmal der verschieden großen Dicken des Lichteinfangabschnitts 111C am Übergang zum Verbindungsabschnitt 111B und des Lichteinkoppelabschnitts 111A am Übergang zum Verbindungsabschnitt 111B ist selbstverständlich auch in dieser gezeigten Variante der Sicherheitszeichenleuchte 100 vorhanden, sodass Lichtreflexe *R* verhindert werden und eine besonders effiziente und homogene Lichtabgabe über den Lichtauskoppelbereich 111D ermöglicht ist.

In der dargestellten Ausführung liegt das Leuchtmittel 120 nicht auf der Oberseite der Abdeckfläche 115 auf, wobei das Leuchtmittel 120 und insbesondere die Platine 122 beispielsweise mit dem Gehäuse 130 gekoppelt sein können, sodass das Leuchtmittel in der Sicherheitszeichenleuchte 100 fixiert gehalten ist und die LEDs 121 von der Lichteinkoppelfläche 118 beabstandet sind. Allerdings sind selbstverständlich auch andere Krümmungen und Höhen des Verbindungsstegs 116 und/oder des Lichteinkoppelabschnitts 111A denkbar, sodass auch hierbei eine Ausführung realisierbar ist, in welcher das Leuchtmittel 120 auf der Oberseite der Abdeckung 114 bzw. der Abdeckfläche 115 aufliegt und dadurch gehalten gelagert ist, eine derartige Ausführung ist beispielhaft in Figur 5 dargestellt. Weiterhin sind auch Ausführungen mit einer Reflexionsfolie 119 mit der in der Figur 4 dargestellten geschwungenen Form des Verbindungsstegs 116 denkbar.

Der Lichteinkoppelabschnitt 111A ist in der in Figur 4 gezeigten Ausführung länger gestaltet als in der Figur 3 gezeigten Ausführung, wobei das in den Lichtleiter 111 eingekoppelte Licht hierbei besser vermischt und homogenisiert wird. Weiterhin bewirkte eine längere Ausgestaltung des Lichteinkoppelabschnitt 111A möglichst stumpfe Winkel an den Seitenflächen des Lichtleiters 111, sodass die Lichtweiterleitung besonders effizient erfolgt.

Weiterhin sind auch andere Montagemöglichkeiten des Abdeckelements 110 am Gehäuse 130 denkbar, wobei neben der bereits beispielhaft beschriebenen Variante der werkzeuglosen Montage auch andere werkzeugbenötigende Varianten realisierbar sind. Hierbei kann insbesondere vorgesehen sein, dass die Halteelemente 117 nicht Teil des Abdeckelements 110, sondern des Gehäuses 130 sind.

Zudem ist es denkbar, dass die Dicke des Lichteinfangabschnitts 111C und des Lichtauskoppelabschnitts 111D gleich sind, wobei der Lichteinfangabschnitt 111C selbst keine Krümmung aufweist. Allerdings sind auch Ausführungen denkbar, in welchen auch der Lichtauskoppelabschnitt 111D eine stetige Verringerung der Dicke aufweist, sodass das auf der Flachseite 112, 113 angebrachte Sicherheitszeichen 140 entsprechend gekippt für eine Person sichtbar ist, was die Lesbarkeit des Sicherheitszeichens 140 weiterhin erhöht.

Insbesondere kann vorgesehen sein, dass das untere Ende des Lichteinfangabschnitts 111C, also der Übergang vom Lichteinfangabschnitt 111C zum Lichtauskoppelabschnitt 111D, eine möglichst geringe Höhe zur Unterseite der Abdeckung 114, insbesondere zur Unterseite der Abdeckfläche 115, aufweist, sodass das Abdeckelement 110 insgesamt eine besonders geringe Höhe aufweist. Beispielsweise kann hierbei zwischen dem unteren Ende des Lichteinfangabschnitts 111C und der Unterseite der Abdeckung 114 eine Höhe in der Größenordnung von zwei Zentimetern vorgesehen sein. Je nach Anforderung des Benutzers sind allerdings auch andere Ausführungen und Dimensionierungen denkbar.

In der Figur 5 ist eine zusätzliche beispielhafte Ausführung einer Rettungszeichenleuchte 100 in einem Querschnitt senkrecht zur Längsachse der Rettungszeichenleuchte 100 dargestellt, wobei diese zusätzliche Ausführungsform der in der Figur 4 dargestellten Sicherheitszeichenleuchte 100 ähnelt. Der Lichteinkoppelabschnitt 111A ist in der in Figur 5 dargestellten Variante kürzer, sodass die Leuchtmittel 120 auf der Abdeckung 114 aufliegend angeordnet werden können, wobei auch hier der gewünschte Abstand zwischen LED 121 und Lichtleiter 111 erreicht wird.

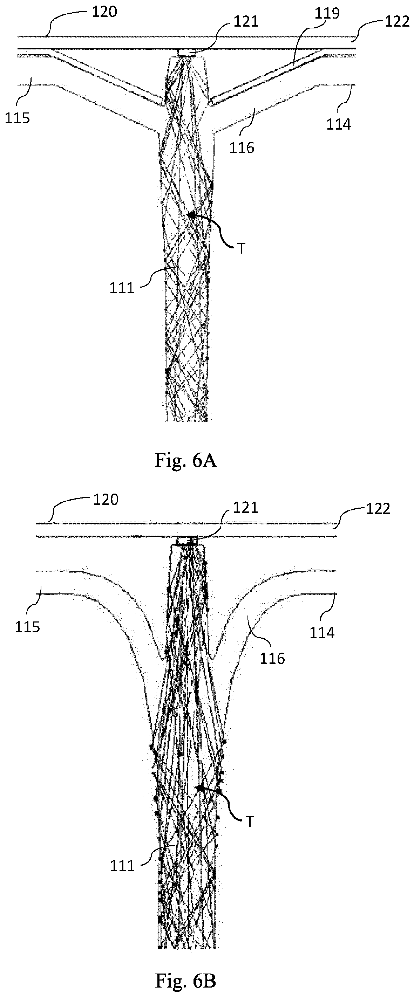

In den Figuren 6A und 6B sind zwei verschiedene Ausführungsformen von Rettungszeichenleuchten 100 dargestellt, wobei jeweils der Strahlengang des von den LEDs 121 abgegebenen Lichts visualisiert wird. In der Figur 6A ist hierbei die aus der Figur 3 bekannte Ausführungsform gezeigt, wobei ersichtlich ist, dass die Seitenflächen des Lichteinkoppelabschnitts 111A zur Totalreflexion ausgestaltet sind, sodass keine Lichtstrahlen hierbei aus dem Lichtleiter austreten. Durch die größere Dicke *D* des Lichteinfangabschnitts 111C am Übergang zum Verbindungsabschnitt 111B in Relation zur Dicke *d* des Lichteinkoppelabschnitts 111A am Übergang zum Verbindungsabschnitt 111B werden die im Verbindungsabschnitt 111B seitlich weggehenden bzw. wegdriftenden Lichtstrahlen im Lichteinfangabschnitt 111C eingefangen, und an den Seitenflächen des Lichteinfangabschnitts 111C totalreflektiert. Das Leuchtmittel 120 liegt hierbei auf der Reflexionsfolie 119 auf, wobei ebenfalls Ausführungen ohne Reflexionsfolie 119 denkbar sind, in denen das Leuchtmittel 120 dann direkt auf der Abdeckung 114 aufliegt oder am Gehäuse 130 gehalten ist. In der dargestellten Ausführungsform sind die LEDs 121 in einer Ausnehmung des Abdeckelements 110 angeordnet, wobei die Ausnehmung insbesondere durch die von der Ebene der Abdeckflächen 115 wegweisenden Verbindungsstege 116 gebildet ist. Die Reflexionsfolie 119 unterstützt hierbei zudem die Verhinderung von Lichtreflexen *R*. Die im Lichteinfangabschnitt 111C eingefangenen Lichtstrahlen werden weiterhin als totalreflektierte Lichtstrahlen *T* in Richtung des Lichtaustrittsabschnitt 111D geleitet. Somit wird das im Lichteinkoppelabschnitt 111A eingekoppelte Licht der LEDs 121 effizient und verlustfrei im Lichtleiter 111 geleitet, und am Lichtauskoppelabschnitt 111D abgestrahlt, sodass eine besonders gleichförmige und störfreie Ausleuchtung des aufgebrachten Sicherheitszeichens 140 erzielt wird. Die Figur 6B zeigt die aus der Figur 4 bekannte Ausführungsform einer Rettungszeichenleuchte 100, wobei hierbei das Leuchtmittel 120 nicht auf der Abdeckung 114 aufliegt und beispielsweise mit dem Gehäuse 130 gekoppelt ist. Der Lichteinkoppelabschnitt 111A ist hierbei im Vergleich zur in Figur 6A gezeigten Ausführung größer bzw. höher gestaltet. Sämtliche Ausführungen der erfindungsgemäßen Sicherheitszeichenleuchte 100 - also auch insbesondere die in den Figuren 6A und 6B gezeigten Ausführungen - haben gemein, dass die im Lichtleiter 111 geführten Lichtstrahlen vom Lichteinkoppelabschnitt 111A bis zumindest zum Lichtauffangabschnitt 111C verlustfrei geleitet werden, wobei stets ein Eintreten von Lichtstrahlen in die Abdeckung 114 und die Bildung von Lichtreflexen *R*, verhindert ist.

Die so beschaffene Rettungszeichenleuchte 100 ermöglicht somit eine besonders klare und deutliche Darstellung des Sicherheitszeichens 140, sodass beispielsweise der auf dem Sicherheitszeichen 140 dargestellte Standort von Feuerlöschern oder die dargestellte Rettungswegrichtung einfach und störungsfrei durch Personen wahrgenommen wird, sodass deren Sicherheit insbesondere in einem Notfall erhöht ist. Lichtreflexe *R*, und somit dadurch auftretende Irritationen, werden mit der erfindungsgemäß gebildeten Rettungszeichenleuchte 100 vermieden.

## Patentansprüche

1. Sicherheitszeichenleuchte (100) aufweisend:
• ein Gehäuse (130), welches sich entlang einer Längsachse (*L*) erstreckt,
• längliche Leuchtmittel (120), bestehend aus einer Platine (122) und zumindest einer LED (121),
• eine Abdeckung (114), welche das Gehäuse (130) zu einer Seite hin abdeckt, sowie
• einen plattenförmigen Lichtleiter (111), welcher einstückig mit der Abdeckung (114) verbunden ist,
wobei der Lichtleiter (111) und die Abdeckung (114) integraler Bestandteil eines Abdeckelements (110) sind,
und wobei der Lichtleiter (111) zumindest
∘ einen dem Leuchtmittel (120) zugewandten Lichteinkoppelabschnitt (111A), welcher zur Lichteinkopplung und Lichtmischung des vom Leuchtmittel (120) abgegebenen Lichts ausgebildet ist, sowie
∘ einen Verbindungsabschnitt (111B), welcher dem Lichteinkoppelabschnitt (111A) nachfolgend angeordnet ist, und an welchem die Abdeckung (114) mit dem Lichtleiter (111) verbunden ist, und
∘ einen Lichteinfangabschnitt (111C), welcher dem Verbindungsabschnitt (111B) nachfolgend angeordnet ist,
aufweist, wobei in einem Querschnitt senkrecht zur Längsachse (*L*) des Lichtleiters (111) die Dicke (*D*) des Lichteinfangabschnitts (111C) am Übergang zum Verbindungsabschnitt (111B) größer ist als die Dicke (*d*) des Lichteinkoppelabschnitts (111A) am Übergang zum Verbindungsabschnitt (111B); und
**dadurch gekennzeichnet, dass** die Abdeckung (114) zumindest eine Abdeckfläche (115) und zumindest einen Verbindungssteg (116) aufweist,
wobei die zumindest eine Abdeckfläche (115) sich in einem Querschnitt senkrecht zur Längsrichtung (*L*) des Abdeckelements (110) im Wesentlichen senkrecht zur Erstreckungsrichtung des Lichtleiters (111) erstreckt,
und wobei der Verbindungssteg (116) mit dem Verbindungsabschnitt (111C) des Lichtleiters (111) verbunden ist.

2. Sicherheitszeichenleuchte gemäß Anspruch 1,
**dadurch gekennzeichnet,**
**dass** der Lichteinkoppelabschnitt (111A) Seitenflächen zur Totalreflexion des einkoppelten Lichts aufweist.

3. Sicherheitszeichenleuchte gemäß Anspruch 1 oder 2,
**dadurch gekennzeichnet,**
**dass** der Lichtleiter (111) weiterhin einen Lichtauskoppelabschnitt (111D) aufweist, wobei der Lichtleiter (111) dazu ausgebildet ist, das von dem Leuchtmittel (120) abgegebene und über den Lichteinkoppelabschnitt (111A) eingestrahlte Licht über zumindest eine Flachseite (112, 113) abzustrahlen,
wobei bevorzugt auf der zumindest einen Flachseite (112, 113) ein Sicherheitszeichen (140) wie beispielsweise ein Rettungswegsymbol (140) angebracht ist.

4. Sicherheitszeichenleuchte gemäß einem der vorherigen Ansprüche,
**dadurch gekennzeichnet,**
**dass** der Lichteinfangabschnitt (111C) Seitenflächen zur Totalreflexion (*T*) des im Inneren des Lichtleiters (111) geführten Lichts aufweist.

5. Sicherheitszeichenleuchte gemäß einem der vorherigen Ansprüche,
**dadurch gekennzeichnet,**
**dass** die Dicke (*D*) des Lichteinfangabschnitts (111C) mit zunehmender Entfernung zum Lichteinkoppelabschnitt (111A) abnimmt.

6. Sicherheitszeichenleuchte gemäß einem der vorherigen Ansprüche,
**dadurch gekennzeichnet,**
**dass** der Verbindungsabschnitt (111B) und der Lichteinfangabschnitt (111C) an ihren Seitenflächen eine stetige Krümmung aufweisen, wobei bevorzugt diese Krümmung auch am Übergang vom Verbindungsabschnitt (111B) zum Lichteinfangabschnitt (111C) stetig ist.

7. Sicherheitszeichenleuchte gemäß einem der vorherigen Ansprüche,
**dadurch gekennzeichnet,**
**dass** das Leuchtmittel (120) im Inneren der Rettungszeichenleuchte (100) und insbesondere auf dem Abdeckelement (110) aufliegend angeordnet ist.

8. Sicherheitszeichenleuchte gemäß einem der vorherigen Ansprüche,
**dadurch gekennzeichnet,**
**dass** der Lichtleiter (111) im Lichteinfangabschnitt (111C) in einem Querschnitt senkrecht zur Längsachse (*L*) im Wesentlichen trapezförmig ausgebildet ist.

9. Sicherheitszeichenleuchte gemäß einem der vorherigen Ansprüche,
**dadurch gekennzeichnet,**
**dass** auf einer der Platine (122) des Leuchtmittels (120) zugewandten Oberfläche der Abdeckung (114) eine Reflexionsfolie (119) angeordnet ist.

10. Sicherheitszeichenleuchte gemäß einem der vorherigen Ansprüche,
**dadurch gekennzeichnet,**
**dass** die Abdeckung (114) im Bereich der Verbindung zum Verbindungsabschnitt (111B) des Lichtleiters (111) im Wesentlichen trichterförmig ausgebildet ist.

11. Sicherheitszeichenleuchte gemäß einem der vorherigen Ansprüche,
**dadurch gekennzeichnet,**
**dass** die LEDs (121) in einer Ausnehmung des Abdeckelements (110) angeordnet sind, wobei die Ausnehmung insbesondere durch den zumindest einen Verbindungssteg (116) der Abdeckung (114) gebildet ist.

12. Sicherheitszeichenleuchte gemäß einem der vorherigen Ansprüche,
**dadurch gekennzeichnet,**
**dass** die Abdeckung (114) Kopplungselemente (117) zur Kopplung des Abdeckelements (110) mit dem Gehäuse (130) aufweist.

13. Sicherheitszeichenleuchte gemäß einem der vorherigen Ansprüche,
**dadurch gekennzeichnet,**
**dass** das Abdeckelement (110) das Gehäuse (130) gemäß einer IP-Schutzart, bevorzugt IP54 oder höher, abdichtet.

14. Sicherheitszeichenleuchte gemäß einem der vorherigen Ansprüche,
**dadurch gekennzeichnet,**
**dass** das Abdeckelement (110) ein Gussteil ist, welches insbesondere in einem Spritzgussverfahren hergestellt wurde,
wobei besonders bevorzugt das Abdeckelement (110) aus einem Kunststoff, insbesondere aus Polymethylmethacrylat gebildet ist.

## Claims

1. A safety sign luminaire (100) comprising:
∘ a housing (130) extending along a longitudinal axis (L);
∘ elongated lighting means (120) consisting of a circuit board (122) and at least one LED (121);
∘ a plate-shaped light guide (111) which is integrally connected to a cover (114), wherein the light guide (111) and the cover (114) form an integral part of a cover element (110),
and wherein the light guide (111) comprises at least:
∘ a light entry section (111A) facing toward the lighting means (120) and configured for coupling in and mixing the light emitted by the lighting means (120);
∘ a connection section (111B) arranged downstream of the light entry section (111A) and at which the cover (114) is attached to the light guide (111);
∘ a light capturing section (111C) arranged downstream of the connection section (111B);
and wherein the cover (114) comprises at least one cover surface (115) and at least one connecting web (116),
the at least one cover surface (115) extending, in a cross-section perpendicular to the longitudinal direction (L) of the cover element (110), essentially perpendicular to the direction of extension of the light guide (111),
and the connecting web (116) being connected to the connection section (111C) of the light guide (111),
wherein, in a cross-section perpendicular to the longitudinal axis (L) of the light guide (111), the thickness (D) of the light capturing section (111C) at the transition to the connection section (111B) is greater than the thickness (d) of the light entry section (111A) at the transition to the connection section (111B);
and **characterized in that**:
∘ a cover (114) which covers the housing (130) on one side; and
∘ the lighting means (120) is arranged in the interior of the safety sign luminaire (100).

2. The safety sign luminaire according to claim 1, **characterized in that** the light entry section (111A) has side surfaces for the total reflection of the coupled-in light.

3. The safety sign luminaire according to claim 1 or 2, **characterized in that** the light guide (111) further comprises a light output section (111D),
wherein the light guide (111) is configured to emit, via at least one flat side (112, 113), the light emitted by the lighting means (120) and introduced through the light entry section (111A),
a safety sign (140), such as an escape route symbol (140), being preferably attached on said at least one flat side (112, 113).

4. The safety sign luminaire according to any one of the preceding claims, **characterized in that** the light capturing section (111C) has side surfaces for the total reflection (T) of the light guided inside the light guide (111).

5. The safety sign luminaire according to any one of the preceding claims, **characterized in that** the thickness (D) of the light capturing section (111C) decreases with increasing distance from the light entry section (111A).

6. The safety sign luminaire according to any one of the preceding claims, **characterized in that** the connection section (111B) and the light capturing section (111C) have a continuous curvature on their side surfaces, wherein preferably this curvature is also continuous at the transition from the connection section (111B) to the light capturing section (111C).

7. The safety sign luminaire according to any one of the preceding claims, **characterized in that** the lighting means (120) is arranged inside the safety sign luminaire (100) and in particular resting on the cover element (110).

8. The safety sign luminaire according to any one of the preceding claims, **characterized in that** the light guide (111) in the light capturing section (111C) is essentially trapezoidal in shape in a cross-section perpendicular to the longitudinal axis (L).

9. The safety sign luminaire according to any one of the preceding claims, **characterized in that** a reflective foil (119) is arranged on a surface of the cover (114) facing the circuit board (122) of the lighting means (120).

10. The safety sign luminaire according to any one of the preceding claims, **characterized in that** the cover (114) in the region of the connection to the connection section (111B) of the light guide (111) is formed essentially funnel-shaped.

11. The safety sign luminaire according to any one of the preceding claims, **characterized in that** the LEDs (121) are arranged in a recess of the cover element (110), wherein the recess is formed in particular by the at least one connecting web (116) of the cover (114).

12. The safety sign luminaire according to any one of the preceding claims, **characterized in that** the cover (114) has coupling elements (117) for coupling the cover element (110) with the housing (130).

13. The safety sign luminaire according to any one of the preceding claims, **characterized in that** the cover element (110) seals the housing (130) according to an IP protection rating, preferably IP54 or higher.

14. The safety sign luminaire according to any one of the preceding claims, **characterized in that** the cover element (110) is a cast part produced in particular by an injection molding process,
wherein particularly preferably the cover element (110) is made of a plastic, in particular of polymethyl methacrylate.

## Revendications

1. Luminaire de signal de sécurité (100) comprenant :
∘ un boîtier (130) qui s'étend le long d'un axe longitudinal (L) ;
∘ une source lumineuse allongée (120) composée d'une carte (122) et d'au moins une LED (121) ;
o un guide de lumière plat (111) relié d'un seul tenant à un couvercle (114), le guide de lumière (111) et le couvercle (114) constituant une partie intégrante d'un élément de couverture (110),
et le guide de lumière (111) comprenant au moins :
∘ une section d'entrée de lumière (111A) orientée vers la source lumineuse (120) et conçue pour coupler et mélanger la lumière émise par la source lumineuse (120) ;
∘ une section de liaison (111B) disposée à la suite de la section d'entrée de lumière (111A) et au niveau de laquelle le couvercle (114) est rattaché au guide de lumière (111) ;
∘ une section de capture de lumière (111C) disposée à la suite de la section de liaison (111B) ;
le couvercle (114) comprend au moins une surface de couverture (115) et au moins une bande de liaison (116),
ladite surface de couverture (115) s'étendant, dans une section transversale perpendiculaire à la direction longitudinale (L) de l'élément de couverture (110), sensiblement perpendiculairement à la direction d'extension du guide de lumière (111),
et la bande de liaison (116) étant reliée à la section de liaison (111C) du guide de lumière (111),
de sorte que, dans une section transversale perpendiculaire à l'axe longitudinal (L) du guide de lumière (111), l'épaisseur (D) de la section de capture de lumière (111C) à la transition vers la section de liaison (111B) est supérieure à l'épaisseur (d) de la section d'entrée de lumière (111A) à la transition vers la section de liaison (111B) ;
et **caractérisé en ce que** :
∘ un couvercle (114) recouvre le boîtier (130) sur un côté ; et
∘ la source lumineuse (120) est disposée à l'intérieur du luminaire de signal de sécurité (100).

2. Luminaire de signal de sécurité selon la revendication 1, **caractérisé en ce que** la section d'entrée de lumière (111A) présente des faces latérales assurant la réflexion totale de la lumière couplée.

3. Luminaire de signal de sécurité selon la revendication 1 ou 2, **caractérisé en ce que** le guide de lumière (111) comprend en outre une section de sortie de lumière (111D), le guide de lumière (111) étant configuré pour émettre, par au moins une face plane (112, 113), la lumière émise par la source lumineuse (120) et introduite via la section d'entrée de lumière (111A),
un signal de sécurité (140), tel qu'un symbole de sortie de secours (140), étant de préférence disposé sur ladite face plane (112, 113).

4. Luminaire de signal de sécurité selon l'une des revendications précédentes, **caractérisé en ce que** la section de capture de lumière (111C) comporte des faces latérales assurant la réflexion totale (T) de la lumière guidée à l'intérieur du guide de lumière (111).

5. Luminaire de signal de sécurité selon l'une des revendications précédentes, **caractérisé en ce que** l'épaisseur (D) de la section de capture de lumière (111C) diminue à mesure que la distance par rapport à la section d'entrée de lumière (111A) augmente.

6. Luminaire de signal de sécurité selon l'une des revendications précédentes, **caractérisé en ce que** la section de liaison (111B) et la section de capture de lumière (111C) présentent une courbure continue sur leurs faces latérales, cette courbure étant de préférence également continue au niveau de la transition de la section de liaison (111B) à la section de capture de lumière (111C).

7. Luminaire de signal de sécurité selon l'une des revendications précédentes, **caractérisé en ce que** la source lumineuse (120) est disposée à l'intérieur du luminaire de signal de sécurité (100) et notamment en appui sur l'élément de couverture (110).

8. Luminaire de signal de sécurité selon l'une des revendications précédentes, **caractérisé en ce que**, dans la section de capture de lumière (111C), le guide de lumière (111) présente une forme sensiblement trapézoïdale dans une section transversale perpendiculaire à l'axe longitudinal (L).

9. Luminaire de signal de sécurité selon l'une des revendications précédentes, **caractérisé en ce qu'**un film réfléchissant (119) est disposé sur une face du couvercle (114) tournée vers la carte (122) de la source lumineuse (120).

10. Luminaire de signal de sécurité selon l'une des revendications précédentes, **caractérisé en ce que** le couvercle (114) est formé de manière sensiblement en entonnoir dans la zone de liaison au guide de lumière (111) au niveau de la section de liaison (111B).

11. Luminaire de signal de sécurité selon l'une des revendications précédentes, **caractérisé en ce que** les LED (121) sont disposées dans un évidement de l'élément de couverture (110), ledit évidement étant notamment formé par la ou les bandes de liaison (116) du couvercle (114).

12. Luminaire de signal de sécurité selon l'une des revendications précédentes, **caractérisé en ce que** le couvercle (114) comporte des éléments de couplage (117) pour l'assemblage de l'élément de couverture (110) avec le boîtier (130).

13. Luminaire de signal de sécurité selon l'une des revendications précédentes, **caractérisé en ce que** l'élément de couverture (110) assure l'étanchéité du boîtier (130) selon un indice de protection IP, de préférence IP54 ou supérieur.

14. Luminaire de signal de sécurité selon l'une des revendications précédentes, **caractérisé en ce que** l'élément de couverture (110) est une pièce moulée produite notamment par un procédé de moulage par injection,
l'élément de couverture (110) étant particulièrement de préférence réalisé en une matière plastique, notamment en polyméthacrylate de méthyle.
